# EUROPÄISCHE PATENTANMELDUNG

(11) **EP 1 988 017 A2**
(43) Veröffentlichungstag der Anmeldung: **05.11.2008**
(21) Anmeldenummer: 08014260.7
(22) Anmeldetag: 23.02.2006
(51) Int. Cl.: B64D 11/06, B60R 22/02, B60R 22/20, B60N 2/30

(54) **Fluggastsitz**

(30) Priorität: 19.05.2005 DE 102005022950
(62) Teilanmeldung aus: 06003672.0
(71) Anmelder: Recaro Aircraft Seating GmbH & Co. KG, 74523 Schwäbisch Hall (DE)
(72) Erfinder: Funke, Matthias, 74544 Michelbach (DE)
(74) Vertreter: Daub, Thomas

(57) **Zusammenfassung**

Die Erfindung geht aus von einem Fluggastsitz mit einem Sitzteil (7), einer Rückenlehne (1) und einer ein Gurtsystem enthaltenden Sicherheitseinrichtung, wobei das Gurtsystem mit einem Schultergurt (37) versehen ist, der mit zumindest einem am Sitzteil (7) seitlich angebrachten Gurtschlosselement (31) zusammenwirkt, und mit einem integrierten Kindersitz mit einem eine erhöhte Kinder-Sitzfläche (17 oder 19) bildenden Auflageteil (13), das an zumindest einem Schwenkhebel (23) gelagert ist.

Es wird vorgeschlagen, dass das Auflageteil (13) bei Nicht-Gebrauch mit dem Schwenkhebel (23) in eine gegenüber der Sitzfläche (11) des Sitzteils (7) nach unten weggeklappte Verstaustellung, in der sich das Auflageteil (13) im Wesentlichen unterhalb des vorderen Randbereichs des Sitzteils (7) befindet, und aus dieser Verstaustellung in seine Gebrauchsstellung hoch schwenkbar ist, in der das Auflageteil (13) die höher liegende Kinder-Sitzfläche (17 oder 19) oberhalb der Sitzfläche (11) des Sitzteils (7) bildet, wobei zumindest ein Gurtschlosselement (31) am Sitzteil (7) für die Lagesicherung des in seiner Gebrauchsstellung oberhalb der Sitzfläche (11) des Sitzteils (7) befindlichen Kindersitzes vorgesehen ist, der eine Sitzerhöhung für das den Fluggastsitz benutzende Kind bildet.

## Beschreibung

Die Erfindung bezieht sich auf einen Fluggastsitz mit einem Sitzteil, einer Rückenlehne und einer ein Gurtsystem enthaltenden Sicherheitseinrichtung.

Um die für die Verkehrsluftfahrt gültigen gesetzlichen Sicherheitsvorschriften zu erfüllen, ist bei den für Verkehrsflugzeuge üblichen Fluggastsitzen ein Beckengurt als Bestandteil der Sitz-Sicherheitseinrichtung vorgesehen, zu der üblicherweise auch die in eine aufrechte Sicherheitsposition einstellbare Rückenlehne mit Kopfstütze gehört. Wie die Erfahrung gezeigt hat, gewährleistet die Benutzung des Beckengurts bei den im normalen Flugbetrieb auf den Passagier einwirkenden Kräften, selbst bei starken, im Flug auftretenden Turbulenzen, eine ausreichende Sicherung des Passagiers im Sitz. Unter nicht normalen Bedingungen, beispielsweise in einem Crashfall, ist die Sicherheitswirkung des Beckengurts jedoch nicht zufriedenstellend, selbst wenn die Rückenlehne in ihre aufrechte Sicherheitsposition eingestellt ist, wie sie für die Betriebsphasen des Rollens, Startens und Landens vorgeschrieben ist.

Es ist in der WO 95/01265 A ein Fluggastsitz bekannt mit einzelnen Sitzkomponenten und einem Gurtsystem, beinhaltend einen Schultergurt und einen hiervon getrennt angeordneten Beckengurt, die sich in einem am Sitzteil seitlich angebrachten Gurtschlosselement in einer den Passagier haltenden Weise festlegen lassen.

Aus der US 5,553,918 ist ferner ein Passagiersitz mit einem Sitzteil, einer Rückenlehne und einer ein Gurtsystem enthaltenden Sicherheitseinrichtung bekannt. Das Sitzteil weist ein Auflageteil auf, welches von einer ersten Stellung, die zu einer Benutzung durch einen erwachsenen Fahrgast vorgesehen ist, in eine zweite Stellung überführbar ist, in welcher es eine gegenüber dem restlichen Sitzteil erhöhte Kindersitzfläche eines faltbaren Kindersitzes bildet.

### Vorteile der Erfindung

Die Erfindung geht aus von einem Fluggastsitz mit einem Sitzteil, einer Rückenlehne und einer ein Gurtsystem enthaltenden Sicherheitseinrichtung, wobei das Gurtsystem mit einem Schultergurt versehen ist, der mit zumindest einem am Sitzteil seitlich angebrachten Gurtschlosselement zusammenwirkt, und mit einem integrierten Kindersitz mit einem eine erhöhte Kinder-Sitzfläche bildenden Auflageteil, das an zumindest einem Schwenkhebel gelagert ist.

Es wird vorgeschlagen, dass das Auflageteil bei Nicht-Gebrauch mit dem Schwenkhebel in eine gegenüber der Sitzfläche des Sitzteils nach unten weggeklappte Verstaustellung, in der sich das Auflageteil im Wesentlichen unterhalb des vorderen Randbereichs des Sitzteils befindet, und aus dieser Verstaustellung in seine Gebrauchsstellung hoch schwenkbar ist, in der das Auflageteil die höher liegende Kinder-Sitzfläche oberhalb der Sitzfläche des Sitzteils bildet, wobei zumindest ein Gurtschlosselement am Sitzteil für die Lagesicherung des in seiner Gebrauchsstellung oberhalb der Sitzfläche des Sitzteils befindlichen Kindersitzes vorgesehen ist, der eine Sitzerhöhung für das den Fluggastsitz benutzende Kind bildet.

Bei vorteilhaften Ausführungsbeispielen ist der Schultergurt an der Rückenlehne angebracht und ist Bestandteil eines Drei-Punkt-Gurtsystems. Die Verwendung eines Drei-Punkt-Gurtsystems bietet dem Passagier, wie die Erfahrung mit derartigen Gurtsystemen im Kraftfahrzeugbetrieb gezeigt hat, nicht nur ein hohes Maß an Bedienungsbequemlichkeit, sondern auch ein sehr hohes Maß an Sicherheit. Die angesprochene erfindungsgemäße Lösung braucht nicht auf ein Single-Sitz-Layout beschränkt zu sein, sondern findet insbesondere Anwendung im Mehrsitzbereich, beispielsweise bei einem Double-Sitz in Nebeneinanderanordnung entweder links oder rechts, im so genannten Triple-Sitz nur mittig und am Vierer-Sitz nicht an der Außenseite.

Bei derartigen Ausführungsbeispielen ist das Gurtschlosselement am Sitzteil wahlweise für die Verankerung des Schultergurts, des diesen enthaltenen Drei-Punkt-Gurtsystems oder eines gesonderten Beckengurts vorgesehen.

Um die wirksame Gurthöhe des Schultergurts zu verändern, um das Gurtsystem an Passagiere unterschiedlicher Körpergrößen optimal anzupassen, ist vorzugsweise an der Rückenlehne eine Höheneinstelleinrichtung zum wahlweisen Verändern der wirksamen Gurthöhe des Schultergurts vorgesehen, d.h. zur Veränderung der Anbindungsstelle des Schultergurts relativ zur Rückenlehne. Aufgrund der Höheneinstelleinrichtung, insbesondere in Form eines lageveränderlichen Auflageteils für den Sitz, welches in eine Gebrauchsstellung gebracht werden kann, lässt sich der so genannte Seat-Reference-Point (SRP) ändern, der Rückschlüsse zulässt über die Sitzgeometrie und die damit zusammenhängenden Abstände. Insoweit lässt sich in ergonomisch günstiger Weise mit den erfindungsgemäßen Maßnahmen der Seat-Reference-Point vorgeben.

Im Hinblick hierauf kann bei besonders vorteilhaften Ausführungsbeispielen die Rückenlehne eine an ihrer Anlehnfläche höheneinstellbar gelagerte Kopfstütze aufweisen, wobei diese als Höheneinstelleinrichtung für den Schultergurt ein Gurtführungselement enthalten kann, das die Anbindungsstelle des Schultergurts definiert, so dass die Höheneinstellung der Kopfstütze die Einstellung der wirksamen Gurthöhe des Schultergurts bewirkt.

Aufgrund der Möglichkeit, die wirksame Gurthöhe des Schultergurts nach Wunsch zu verändern, eignen sich derartige Ausführungsbeispiele des erfindungsgemäßen Fluggastsitzes besonders gut für den Fall, dass Kinder als Passagiere zu befördern sind und der Kindersitz zur Anwendung kommt. Die Möglichkeit der Veränderung der Gurthöhe des Schultergurts erlaubt die optimale Anpassung an die jeweilige Körpergröße des betreffenden Kinds.

Für die Lagesicherung des Auflageteils in der Gebrauchsstellung kann am jeweiligen Schwenkhebel des Auflageteils ein Gurtschlosselement vorhanden sein, das bei der Gebrauchsstellung des Auflageteils mit einem zugeordneten Gurtschlosselement am Sitzteil verrastet, so dass das Auflageteil in der Gebrauchsstellung gesichert ist.

Dabei kann die Anordnung so getroffen sein, dass zumindest ein Schwenkhebel des Auflageteils ein weiteres, zweites Gurtschlosselement aufweist, das bei der Gebrauchsstellung des Kindersitzes wahlweise für die Verankerung des Schultergurts, eines diesen enthaltenden Drei-Punkt-Gurtsystems oder eines gesonderten Beckengurts vorgesehen ist.

Nachstehend ist die Erfindung anhand von in der Zeichnung dargestellten Ausführungsbeispielen im Einzelnen erläutert: Es zeigen:
- Fig. 1 eine perspektivische, abgebrochen und stark schematisch vereinfacht gezeichnete Schrägansicht eines Ausführungsbeispiels des erfindungsgemäßen Fluggastsitzes, wobei ein Armlehnen-Seitenteil weggelassen ist,
- Fig. 2 eine perspektivische, stark schematisch vereinfacht gezeichnete Darstellung lediglich des Rückenlehnenbereichs eines gegenüber Figur 1 abgewandelten Ausführungsbeispiels des erfindungsgemäßen Fluggastsitzes,
- Fig. 3 eine perspektivische, stark schematisch vereinfacht gezeichnete Schrägansicht des erfindungsgemäßen Fluggastsitzes mit einem alternativen Gurtsystem, wobei ein Armlehnen-Seitenteil weggelassen und der Zustand bei Nicht-Gebrauch eines integrierten Kindersitzes gezeigt ist, und
- Fig. 4 eine der Figur 3 entsprechende Ansicht, wobei der Zustand bei der Gebrauchsstellung des Kindersitzes gezeigt ist.

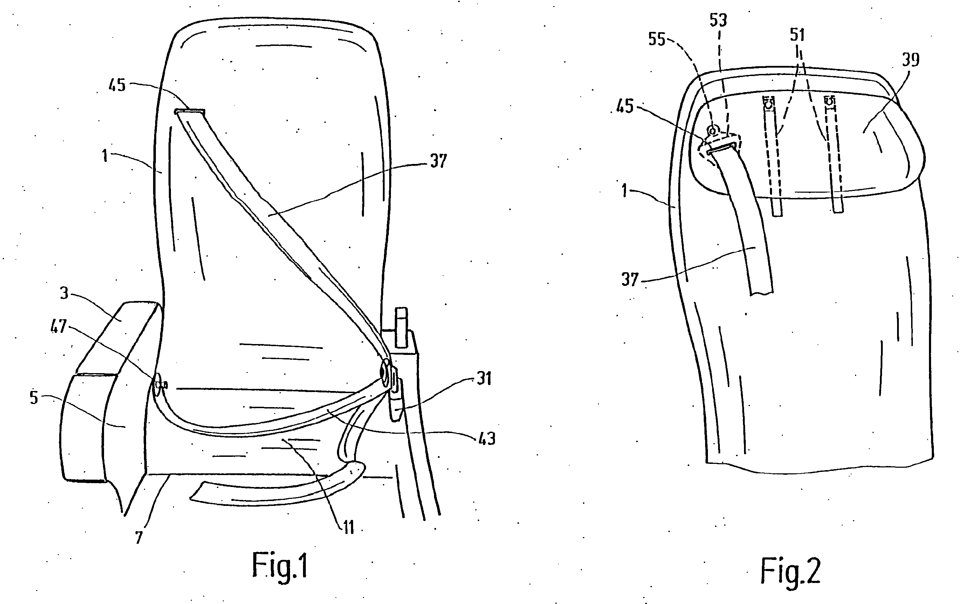

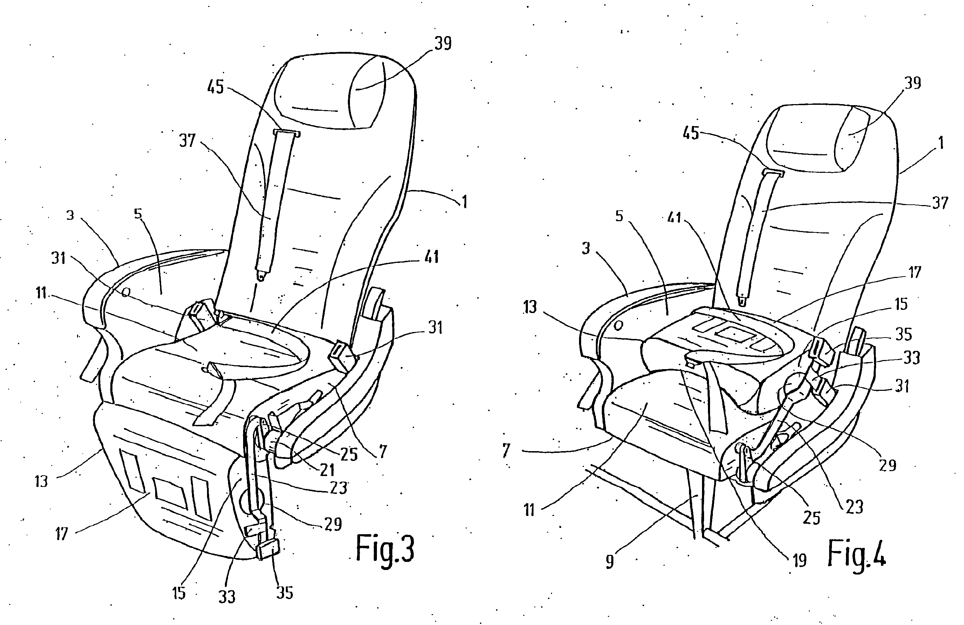

Figur 1 zeigt von einem Fluggastsitz gemäß einem ersten Ausführungsbeispiel der Erfindung lediglich einige zur Erläuterung der Erfindung wesentliche Bauelemente, wobei eine Rückenlehne mit 1 bezeichnet ist. Von zwei seitlichen Armlehnen ist der Übersichtlichkeit halber lediglich eine Armlehne 3 eingezeichnet, deren unteres Seitenteil mit 5 bezeichnet ist. Sofern der Fluggastsitz Bestandteil einer Mehrsitzanordnung ist, braucht die zuordenbare Armlehne, die in der Mitte der Sitzreihe angeordnet ist, kein zugeordnetes Seitenteil und braucht nicht nach unten zum Sitzboden hin geschlossen zu sein. Vorzugsweise sind die zuordenbaren Seitenteile für die dahingehende Sitzreihe nur an den Außenarmlehnen, um hier eine Begrenzung der Sitzeinheit gegenüber der Umgebung zu gewährleisten. Die an der Oberseite eines Sitzteils 7 befindliche Passagier-Sitzfläche ist mit 11 bezeichnet. Die Beschreibung der Figuren 1 und 2 beschränkt sich zunächst auf die Darstellung eines Sitz-Gurtsystems, mit welchem der Fluggastsitz versehen ist. Der Fluggastsitz weist ferner einen Kindersitz auf, welcher anhand von den Figuren 3 und 4 weiter unten beschrieben ist.

Als Bestandteil eines Sitz-Gurtsystems ist ein Gurtschlosselement 31 im seitlichen Randbereich der Sitzfläche 11 an der Sitzstruktur verankert. Bei dem in Figur 1 gezeigten Beispiel bildet ein Schultergurt 37 einen Bestandteil des Gurtsystems. Der Schultergurt 37, der von einer Anbindungsstelle 45 an der Rückenlehne 1 ausgehend, über die Sitzbreite hinweg schräg verlaufend, mit dem Gurtschlosselement 31 verrastet werden kann (der verrastete Zustand ist in Figur 1 dargestellt), bildet beim vorliegenden Ausführungsbeispiel einen Bestandteil eines so genannten Drei-Punkt-Gurtsystems in Kombination mit einem zugehörigen Beckengurt 43, dessen dem Gurtschlosselement 31 entferntes Ende an einer Verankerungsstelle 47 verankert ist, die sich, dem Gurtschlosselement 31 gegenüberliegend, an der Sitzstruktur befindet. Anstelle der in Figur 1 gezeigten Lösung, bei der der Schultergurt 37 zusammen mit einem integrierten Beckengurt 43 das Drei-Punkt-Gurtsystem bildet, kann, wie nachstehend am Beispiel der Figuren 3 und 4 gezeigt, ein separater Beckengurt 41 vorgesehen sein, gegebenenfalls in Verbindung mit einem ihm eigens zugeordneten Gurtschlosselement.

In der in der Kraftfahrzeugtechnik üblichen Weise kann der Schultergurt 37 ohne Verlängerungs- oder Verkürzungselemente vorgesehen sein (wie gezeigt), wobei entsprechend der in der Kraftfahrzeugtechnik üblichen Weise eine Gurtaufroll- und Auszieheinrichtung vorhanden ist (nicht gezeigt), die an einem entsprechenden Strukturelement festgelegt ist, gurtstraffend wirkt und in üblicher Weise schnelle Ausziehbewegungen sperrt.

Figur 2 zeigt ein abgewandeltes Ausführungsbeispiel, bei dem eine Höheneinstelleinrichtung 53 vorhanden ist, mittels deren die wirksame Gurthöhe des Schultergurts 37 veränderbar ist, d.h. mittels deren die Gurt-Anbindungsstelle 45 relativ zur Rückenlehne 1 lageeinstellbar ist. Beim Beispiel von Figur 2 befindet sich an der Anlehnfläche im oberen Bereich der Rückenlehne 1 eine Kopfstütze 39, die mittels sperrbarer Verschiebeführungen 51 an der Rückenlehne 1 höheneinstellbar ist. Zur Bildung der Anbindungsstelle 45 erstreckt sich der Schultergurt 37, von der Rückenlehne 1 ausgehend, durch die in die Kopfstütze 39 integrierte, als Gurtführungselement ausgebildete Höheneinstelleinrichtung 53 hindurch und aus der Vorderseite der Kopfstütze 39 heraus. Das der Kopfstütze 39 zugeordnete, an einer Schwenkstelle 55 schwenkbeweglich gelagerte Gurtführungselement bildet daher die Höheneinstelleinrichtung 53, die die wirksame Gurthöhe des Schultergurts 37 in Abhängigkeit von der Höheneinstellung der Kopfstütze 39 entlang der Führungen 51 verändert.

Die Figuren 3 und 4 zeigen den Fluggastsitz, welcher mit einem integrierten Kindersitz versehen ist, der zur Bildung einer erhöhten Kinder-Sitzfläche 17 oder 19 (siehe Figur 4) mit einem beweglichen Sitz-Auflageteil 13 versehen ist, das bei diesem Ausführungsbeispiel durch ein Formkissen gebildet ist.

Das mit 7 bezeichnete Sitzteil, das über Sitzfüße 9 (Figur 4) auf einem zugehörigen Kabinenboden aufgeständert ist, weist die Sitzfläche 11 zur Nutzung durch einen erwachsenen Passagier auf. Figur 3 zeigt den Fluggastsitz in dem Zustand, der für die Benutzung durch einen erwachsenen Passagier vorgesehen ist, d.h. den Zustand des Nicht-Gebrauchs des dem Sitz zugehörigen Kindersitzes. In diesem Zustand befindet sich das Auflageteil 13, das zur Bildung eines Kindersitzes verwendet wird, in der in Figur 3 gezeigten Verstaustellung, in der das Auflageteil 13 sich in einer nach unten abgeklappten Stellung befindet, in der sich das Auflageteil 13 im Wesentlichen unterhalb des vorderen Randbereichs des Sitzteils 7 und im Bereich der Sitzfüße 9 befindet.

Figur 4 zeigt den Zustand, bei dem sich das Auflageteil 13 in der Gebrauchsstellung als Kindersitz befindet, wobei es aus der in Figur 3 gezeigten Verstaustellung nach oben geklappt ist und auf der Sitzfläche 11 des Sitzteils 7 liegt. Bei der Darstellung von Figur 4 bildet das Auflageteil 13 mit seiner oben liegenden, zwischen im Wesentlichen ebenen Seitenflächen 15 verlaufenden Breitseite eine Kinder-Sitzfläche 17, die eine im Wesentlichen ebene oder leicht konvex gewölbte Form besitzt. Das lageveränderliche Formteil, das die Sitzfläche bildet, hat aber bei einer besonders bevorzugten Ausführungsform eine auf beiden Seiten im Wesentlichen ebene Form. Die unterschiedliche Sitzhöhe wird dabei durch die Drehachse gebildet, die sich außerhalb der Mitte befindet und somit unterschiedliche Sitzhöhen für den Sitzbenutzer generiert.

Die entgegengesetzte Breitseite des Auflageteils 13, die bei der Darstellung von Figur 3 unten liegend ist, ist zur Bildung einer Art Sitzmulde konkav gewölbt oder vertieft. Aufgrund dieser Vertiefung kann diese Breitseite, wenn das Auflageteil 13 aus der in Figur 4 gezeigten Orientierung um 180° verdreht ist, eine Kinder-Sitzfläche 19 bilden, die gegenüber der Kinder-Sitzfläche 17 eine geringere Sitzerhöhung bildet. Die Einzeleinheiten der Einstelleinrichtung zum Überführen des Auflageteils 13 zwischen nach unten weggeklappter Verstaustellung und Gebrauchsstellung sowie zur Änderung der Orientierung des Auflageteils 13 für die wahlweise Nutzung der Kinder-Sitzfläche 17 oder der Kinder-Sitzfläche 19 werden anhand der Figuren 3 und 4 näher erläutert.

Figur 3 zeigt in stark schematisch vereinfachter Darstellung die Nicht-Gebrauchsstellung des Kindersitzes, wobei das Auflageteil 13 um den Bereich einer quer verlaufenden, als Tragholm ausgebildeten Tragstruktur 21 herum nach unten geschwenkt ist, so dass es sich entlang eines Sitzfußes 9 gegen den Kabinenboden hin erstreckt. Für die Schwenkbewegung zwischen der in Figur 3 gezeigten Verstaustellung und der Gebrauchsstellung, wie sie in Figur 4 gezeigt ist, ist das Auflageteil 13 an seitlichen Schwenkhebeln 23 gelagert, deren eines, bogenförmig gekrümmtes Ende jeweils an einem Lagerbock 25 schwenkbar gelagert ist, die an der Tragstruktur 21 befestigt sind und sich von diesem nach oben erstrecken. Der Lagerbock 25 muss nicht zwingend am Tragholm schwenkbar gelagert sein, sondern er könnte auch entsprechend am Sitzteiler des Sitzes befestigt werden. In den Figuren ist jeweils nur einer der Schwenkhebel 23 sichtbar. An den gekrümmten Abschnitt jedes Schwenkhebels 23 schließt sich ein, von einer leichten Abkröpfung nach außen abgesehen, gerader Abschnitt des Schwenkhebels 23 an, von dem sich ein seitlicher Schwenkzapfen zum Auflageteil 13 hin erstreckt. Deren Seitenflächen 15 weisen jede einen Drehteller 29 in Form einer runden Scheibe auf, die mit dem Kernmaterial des Auflageteils 13 an dessen Seitenfläche 15 verbunden ist, beispielsweise in ein den Kern des Auflageteils 13 bildendes Schaumstoffmaterial eingeschäumt ist.

Die Drehteller 29 bilden zusammen mit dem Schwenkzapfen am Schwenkhebel 23 eine Drehlagerung, um die das Auflageteil 13 drehbar ist. Die Lage der Drehlagerung ist so gewählt, dass das Auflageteil 13 bei der Gebrauchsstellung die in Figur 4 gezeigte Position einnehmen kann, bei der die Kinder-Sitzfläche 17 oben liegend ist, oder eine um 180° gewendete Position einnehmen kann, bei der in der Gebrauchsstellung des Kindersitzes die andere, vertiefte Kinder-Sitzfläche 19 (Figur 4) oben liegend ist, wobei die Kinder-Sitzhöhe vergleichsweise niedriger liegt.

Am Sitzteil 7 sind beidseits der Sitzfläche 11 Gurtschlosselemente 31 angebracht (Figur 3). Bei der Gebrauchsstellung des Kindersitzes, also bei hoch geschwenktem Auflageteil 13 entsprechend der Darstellung der Figur 4, dienen diese Gurtschlosselemente 31 der Sicherung des Kindersitzes in der Gebrauchsstellung, d.h. der Lagesicherung des Auflageteils 13. Zu diesem Zweck erstreckt sich von jedem Schwenkhebel 23 im Bereich des Drehtellers 29 ein zum Gurtschlosselement 31 komplementäres Gurtschlosselement 33, das bei hoch geschwenktem Schwenkhebel 23 mit dem Gurtschlosselement 31 verrastet (siehe Figur 4). Wie besonders deutlich aus Figur 4 zu ersehen ist, ist der Schwenkhebel 23 über den Bereich des Schwenkzapfens am Drehteller 29 hinaus verlängert und weist am verlängerten Ende ein zweites Gurtschlosselement 35 auf, das sich aufgrund des bei der Gebrauchsstellung des Kindersitzes schräg nach oben gerichteten Verlaufs des Schwenkhebels 23 im Bereich der Oberseite der Kinder-Sitzfläche 17 oder 19 befindet.

Dieses Gurtschlosselement 35, hier als zweites Gurtschlosselement bezeichnet, ist daher, der Sitzerhöhung des Kindersitzes angepasst, gegenüber dem Gurtschlosselement 31 nach oben versetzt, so dass es für das Gurtsystem des Kinds in richtig angepasster Höhenlage benutzbar ist. Hierbei kann es sich zusätzlich zum Schultergurt 37 um einen am Sitzteil verankerten, üblichen Beckengurt 41 handeln, der bei Verwendung des Kindersitzes mit dem erhöht gelegenen Gurtschlosselement 35 verrastbar ist, oder um ein Drei-Punkt-Gurtsystem, zu dem der Schultergurt 37 gehört. Dieses wird zusammen mit dem zugehörigen Beckengurt 43 mit dem höher liegenden Gurtschlosselement 35 verrastet. Der Schultergurt 37 kann bei Nicht-Gebrauch des Kindersitzes, entsprechend der Darstellung von Figur 1, auch einen Teil eines Drei-Punkt-Gurtsystems für den normalen, erwachsenen Passagier bilden, wobei das Gurtsystem in diesem Fall mit einem am Sitzteil 7 befindlichen Gurtschlosselement 31 zusammenwirkt. Bei Nicht-Gebrauch des Kindersitzes ist der Beckengurt 41 für den erwachsenen Passagier mit einem der tiefer liegenden Gurtschlosselemente 31 verrastbar. Neben den angesprochenen erfindungsgemäßen Lösungen besteht auch die Möglichkeit einer Höheneinstellung des Schultergurts mittels nicht näher dargestellter Gurtklemmen oder einer Gurtumlenkung, die gegebenenfalls auch in Verbindung stehen können mit der bereits beschriebenen, in der Kopfstütze 39 integrierten, als Gurtführungselement ausgebildeten Höheneinstelleinrichtung 53.

## Patentansprüche

1. Fluggastsitz mit einem Sitzteil (7), einer Rückenlehne (1) und einer ein Gurtsystem enthaltenden Sicherheitseinrichtung, wobei das Gurtsystem mit einem Schultergurt (37) versehen ist, der mit zumindest einem am Sitzteil (7) seitlich angebrachten Gurtschlosselement (31) zusammenwirkt, und mit einem integrierten Kindersitz mit einem eine erhöhte Kinder-Sitzfläche (17 oder 19) bildenden Auflageteil (13), das an zumindest einem Schwenkhebel (23) gelagert ist, **dadurch gekennzeichnet, dass** das Auflageteil (13) bei Nicht-Gebrauch mit dem Schwenkhebel (23) in eine gegenüber der Sitzfläche (11) des Sitzteils (7) nach unten weggeklappte Verstaustellung, in der sich das Auflageteil (13) im Wesentlichen unterhalb des vorderen Randbereichs des Sitzteils (7) befindet, und aus dieser Verstaustellung in seine Gebrauchsstellung hoch schwenkbar ist, in der das Auflageteil (13) die höher liegende Kinder-Sitzfläche (17 oder 19) oberhalb der Sitzfläche (11) des Sitzteils (7) bildet, wobei zumindest ein Gurtschlosselement (31) am Sitzteil (7) für die Lagesicherung des in seiner Gebrauchsstellung oberhalb der Sitzfläche (11) des Sitzteils (7) befindlichen Kindersitzes vorgesehen ist, der eine Sitzerhöhung für das den Fluggastsitz benutzende Kind bildet.

2. Fluggastsitz nach Anspruch 1, **dadurch gekennzeichnet, dass** der Schultergurt (37) an der Rückenlehne (1) angebracht und Bestandteil eines Drei-Punkt-Gurtsystems (37, 43) ist.

3. Fluggastsitz nach Anspruch 1 oder 2, **dadurch gekennzeichnet, dass** das Gurtschlosselement (31) am Sitzteil (7) wahlweise für die Verankerung des Schultergurts (37), des diesen enthaltenden Drei-Punkt-Gurtsystems (37, 43) oder eines gesonderten Beckengurts (41) vorgesehen ist.

4. Fluggastsitz nach einem der Ansprüche 1 bis 3, **dadurch gekennzeichnet, dass** an der Rückenlehne (1) eine Höheneinstelleinrichtung (53) zum wahlweisen Verändern der wirksamen Gurthöhe des Schultergurts (37) vorgesehen ist.

5. Fluggastsitz nach Anspruch 4, **dadurch gekennzeichnet, dass** die Rückenlehne (1) eine an ihrer Anlehnfläche höheneinstellbar gelagerte Kopfstütze (39) aufweist und dass diese als Höheneinstelleinrichtung (53) für den Schultergurt ein Gurtführungselement enthält, das eine Anbindungsstelle (45) des Schultergurts (37) definiert, so dass die Höheneinstellung der Kopfstütze (39) die Einstellung der wirksamen Gurthöhe des Schultergurts (37) bewirkt.

6. Fluggastsitz nach nach einem der vorhergehenden Ansprüche, **dadurch gekennzeichnet, dass** das Auflageteil (13) an je einem an jeder seiner Seitenflächen (15) befindlichen Schwenkhebel (23) gelagert ist, die ihrerseits an der Tragstruktur (21) des Sitzteils (7) schwenkbar gelagert sind, und dass jeder Schwenkhebel (23) ein Gurtschlosselement (33) zur Verrastung mit einem zugeordneten Gurtschlosselement (31) am Sitzteil (7) aufweist.

7. Fluggastsitz nach Anspruch 6, **dadurch gekennzeichnet, dass** zumindest einer der Schwenkhebel (23) ein weiteres zweites Gurtschlosselement (35) aufweist, das bei der Gebrauchsstellung des Kindersitzes wahlweise für die Verankerung des Schultergurts (37), eines diesen enthaltenden Drei-Punkt-Gurtsystems (37, 43) oder eines gesonderten Beckengurts (41) vorgesehen ist.

8. Fluggastsitz nach einem der vorhergehenden Ansprüche, **dadurch gekennzeichnet, dass** das Auflageteil (13) als Formkissen ausgebildet ist.

9. Fluggastsitz nach einem der vorhergehenden Ansprüche, **dadurch gekennzeichnet, dass** das Sitzteil (7) über Sitzfüße (9) auf einem Kabinenboden aufgeständert ist, wobei das Auflageteil (13) in der nach unten weggeklappten Verstaustellung im Bereich der Sitzfüße (9) angeordnet ist.
